# EUROPÄISCHE PATENTSCHRIFT

(11) **EP 3 583 673 B1**
(45) Veröffentlichungstag und Bekanntmachung des Hinweises auf die Patenterteilung: **31.03.2021**
(21) Anmeldenummer: 18707317.6
(22) Anmeldetag: 19.02.2018
(51) Int. Cl.: H02J 1/08, H02J 1/14, H02J 1/10

(54) **VERFAHREN ZUM BETRIEB EINES GLEICHSTROM-NETZES SOWIE GLEICHSTROM-NETZ**
METHOD FOR OPERATING A DC NETWORK AND DC NETWORK
PROCÉDÉ DE FONCTIONNEMENT D'UN RÉSEAU DE COURANT CONTINU ET RÉSEAU DE COURANT CONTINU

(30) Priorität: 23.03.2017 EP 17162600
(43) Veröffentlichungstag der Anmeldung: 25.12.2019
(73) Patentinhaber: Siemens Aktiengesellschaft, 80333 München (DE)
(72) Erfinder: SCHIERLING, Hubert, 91052 Erlangen (DE); WEIS, Benno, 91334 Hemhofen (DE)
(86) Internationale Anmeldenummer: PCT/EP2018/054035
(87) Internationale Veröffentlichungsnummer: WO 2018/172000

(56) Entgegenhaltungen:
- EP-A2- 2 757 647
- WO-A1-2012/038101
- US-A1- 2003 098 619
- US-A1- 2014 028 094
- US-B2- 7 489 048

## Beschreibung

Die Erfindung betrifft ein Verfahren zum Betrieb eines Gleichstrom-Netzes. Weiterhin betrifft die Erfindung ein Gleichstrom-Netz.

Eine Energieverteilung beispielsweise innerhalb einer Industrieanlage mittels Gleichstrom (DC) ist nicht nur aufgrund eines einfachen Energieaustausches zwischen Geräten und / oder einem einfachen Anschluss an (regenerative) Energiequellen vorteilhaft. Auch die einfache und hohe Modularität eines DC-Netzes hat sich gerade in der heutigen sich ständig verändernden Industrie als vorteilhaft erwiesen.

Typischerweise weisen Gleichstrom-Netze, im Folgenden auch DC-Netze genannt, mehrere Netzabschnitte, beispielsweise Energiequellen, Energiespeicher sowie elektrische Verbraucher auf. Die Netzabschnitte sind häufig über Schalt- und Schutzelemente miteinander elektrisch trennbar verbunden. Zur Trennung der Netzabschnitte weist das Schalt- und Schutzorgan üblicherweise elektronische und / oder galvanische Schalter auf.

Üblicherweise weist ein DC-Netz auch eine Verbindung zu einem Drehstromnetz auf, welches die Versorgung des DC-Netzes bildet. Der Drehstrom wird hierbei häufig mit Hilfe eines Gleichrichters gleichgerichtet und über eine Einspeiseeinheit dem DC-Netz zugeführt.

Bei einem gewollten und / oder ungewollten Herunterfahren des DC-Netzes sowie beispielsweise einer Trennung des DC-Netzes vom Drehstromnetz weisen die Energiespeicher des DC-Netzes aufgrund ihrer unterschiedlich hohen elektrischen Ladung üblicherweise unterschiedliche Spannungen auf. Ein Zusammenschalten der Netzabschnitte untereinander und / oder an das Drehstromnetz ist im geladenen Zustand der Energiespeicher aufgrund eines durch das Zusammenschalten verursachten unkontrollierten Fließens von Umladeströmen unerwünscht und möglichst zu vermeiden, da die Umladeströme häufig zu irreversiblen Schäden innerhalb des DC-Netzes führen.

Zur kontrollierten Begrenzung eines Umladestroms besteht die Möglichkeit mittels einer Überbrückungsschaltung ein kontrolliertes Abfließen der Umladeströme zu realisieren. Hierzu ist die Überbrückungsschaltung gemäß ihrer Bezeichnung innerhalb des Schalt- und Schutzelementes eines jeden Netzabschnittes derart angeordnet, sodass sie die Schalter überbrückt. Somit weist das Schalt- und Schutzorgan einen weiteren sich parallel zu den Schaltern erstreckenden Strompfad - nämlich die Überbrückungsschaltung - auf. Die Überbrückungsschaltung weist typischerweise ein strombegrenzendes Bauteil, beispielsweise einen ohm schen Widerstand und einen Überbrückungsschalter, beispielweise einen galvanischen Schalter auf. Aufgrund der bevorzugten Realisierung der Strombegrenzung mittels eines ohm'schen Widerstandes, wird diese Variante auch resistive Strombegrenzung genannt.

Ein Schließen des Überbrückungsschalters bei geöffnetem Schalt- und Schutzorgan hat ein Fließen von Umladeströmen durch die Überbrückungsschaltung zur Folge. Durch das strombegrenzende Bauteil werden die Umladeströme in ihrem Wert begrenzt.

Die Strombegrenzung mittels der Überbrückungsschaltung ist allerdings zum einen durch den ohm'schen Widerstand verlustbehaftet und zum anderen mit einem hohen Arbeits- und Materialaufwand verbunden, da jeder Netzabschnitt eine eigene auf den jeweiligen Netzabschnitt passend dimensionierte Überbrückungsschaltung aufweisen muss.

Aus der EP 2 757 647 A2 ist ein Gleichstromnetz zu entnehmen, welches mehrere Lasten aufweist, die jeweils an eine gemeinsame Spannungsversorgung angeschlossen sind. Die Spannungsversorgung weist hierbei mehrere Spannungsquellen auf, die jeweils durch eine Schalteinheit reversibel an die jeweiligen Lasten zuschaltbar sind. Die Schalteinheit weist hierzu mehrere Schaltelemente auf, die nach Art einer Matrix innerhalb der Schalteinheit angeordnet und angeschlossen sind.

Die US 2014/0028094 A1 beschreibt ein Gleichstromnetz mit mehreren Lasten, die mit einer gemeinsamen, zweigeteilten Spannungsversorgung verbunden sind. Zur Trennung der Lasten von der Spannungsversorgung weist das Gleichstromnetz mehrere Schaltelemente auf, die zwischen der Spannungsversorgung und den Lasten angeordnet sind. Eine Steuerung der elektrischen Versorgung der einzelnen Lasten mittels der zweigeteilten Spannungsversorgung erfolgt über eine Controller-Einheit, sodass lastabhängig verschiedene Spannungsniveaus auf die Lasten geschaltet werden können.

Der WO 2012/038101 A1 ist eine Leistungsschalter-Anordnung zu entnehmen, die in einem Gleichspannungsnetz angeordnet ist. Die Leistungsschalter-Anordnung ist derart ausgebildet einen elektrischen Strom bidirektional zu leiten und zu begrenzen.

Ausgehend hiervon liegt der Erfindung die Aufgabe zugrunde, ein Verfahren zum Betrieb eines Gleichstrom-Netzes anzugeben, mit dessen Hilfe auftretende Umladeströme verlustarm und mit geringem Aufwand begrenzt werden.

Die Aufgabe wird erfindungsgemäß gelöst durch ein Verfahren zum Betrieb eines Gleichstrom-Netzes (DC-Netz) mit den Merkmalen des Anspruchs 1. Vorteilhafte Ausgestaltungen, Weiterbildungen und Varianten sind Gegenstand der Unteransprüche.

Das DC-Netz weist mehrere über ein Schaltelement trennbar verbundene Netzabschnitte und eine Einspeiseeinheit auf. Die Einspeiseeinheit und die Netzabschnitte sind hierbei ebenfalls mittels zumindest eines Schaltelements trennbar verbunden. Die Schaltelemente weisen zum einen einen elektronischen Schalter, beispielsweise einen Transistor zum Schalten einer Leistung des DC-Netzes und zum anderen einen galvanischen Schalter zu einer Potentialtrennung auf. Der galvanische Schalter ist als Schutzschalter ausgebildet und dient einem Freischalten des mit ihm verbundenen Netzabschnittes von der Einspeiseeinheit, beispielsweise in einem Notfall oder zu einem Schutz von Arbeitern beispielsweise bei Wartungsarbeiten.

Weiterhin werden nach einem Trennen der Einspeiseeinheit von den Netzabschnitten und vor einem (erneuten) Zusammenschalten der Einspeiseeinheit mit den Netzabschnitten auftretende Umladeströme mit Hilfe einer steuerbaren Strombegrenzereinheit begrenzt. Unter steuerbar wird hierbei vorliegend dem allgemeinen Sprachgebrauch eine bewusste Variierung und / oder Variierbarkeit einer Höhe eines Umladestromes verstanden.

Die Variierbarkeit der Höhe des Umladestromes ist ein Vorteil gegenüber einer Strombegrenzung mittels eines rein ohm'schen Widerstandes, da bei diesem ein maximal fließender Strom durch das ohm'sche Gesetz festgelegt ist. Die steuerbare Strombegrenzereinheit ist somit individuell auf jedes DC-Netz anpassbar.

Weiterhin werden die Umladeströme der Netzabschnitte bevorzugt mittels einer steuerbaren Strombegrenzereinheit begrenzt. Dieser Ausgestaltung liegt die Überlegung zugrunde, dass aufgrund der steuerbaren Strombegrenzereinheit eine Anpassung dieser auf mögliche Veränderungen der Umladeströme auf einfache Weise erfolgt und realisiert wird. Unter Veränderungen der Umladeströme wird beispielsweise eine Erhöhung der Umladeströme beispielsweise durch eine Erweiterung des DC-Netzes um weitere Netzabschnitte verstanden.

Umladeströme fließen üblicherweise bei einem Zusammenschalten von Energiespeichern, welche einen unterschiedlichen Ladezustand und somit unterschiedliche Spannungsniveaus aufweisen. Die Umladeströme sind meist unkontrolliert, unerwünscht und führen oftmals zu einer Beschädigung und / oder Zerstörung von Bauteilen des DC-Netzes.

Durch die steuerbare Begrenzung der Umladeströme ist für die Bauteile des DC-Netzes ein gefahrloses Zusammenschalten der einzelnen Netzabschnitte mit der Einspeiseeinheit nach einem vorhergehenden Trennen gewährleistet.

Zweckdienlicherweise ist das DC-Netz über eine Einspeiseleitung mit der Einspeiseeinheit verbunden, sodass das DC-Netz über die Einspeiseleitung von der Einspeiseeinheit mit einer Einspeisespannung gespeist wird. Analog und zusätzlich weist die Strombegrenzereinheit eine Verteilerleitung auf, über die sie mit den Netzabschnitten verbunden ist. Die Strombegrenzereinheit ist somit derart mit den Netzabschnitten des DC-Netzes verbunden, dass sie mögliche Umladeströme aller mit dem DC-Netz verbundenen Netzabschnitte über die Verteilerleitung begrenzt.

Hierdurch bildet das Strombegrenzerelement eine zentrale Strombegrenzung im Vergleich zu der resistiven Strombegrenzung, welche individuell an jedem Netzabschnitt erfolgt. Weiterhin ist hierdurch ein geringer schaltungstechnischer Aufwand realisiert.

Gemäß einer vorteilhaften Ausgestaltung ist die Strombegrenzereinheit in einer ersten Ausgestaltungsvariante als ein steuerbarer Spannungsgeber ohne Potentialtrennung, beispielsweise als eine steuerbare Spannungsquelle ausgebildet. Zudem weist die Verteilerleitung eine Ladeleitung auf, über die die Netzabschnitte nach einem Trennen von der Einspeiseeinheit und vor einem Zusammenschalten mit derselbigen eine Vorladung erfahren.

Zur Vorladung speist der steuerbare Spannungsgeber über die Vorladeleitung eine Vorladespannung in die Netzabschnitte ein und gleicht somit die unterschiedlichen Spannungen der Energiespeicher an die Vorladespannung an. Allgemein werden die Umladeströme somit unabhängig der unterschiedlichen Spannungsniveaus begrenzt.

Unter Angleichen wird hierbei allerdings nicht zwangsläufig verstanden, dass die Spannungen der Netzabschnitte nach dem Vorladen exakt der Vorladespannung entsprechen. Vielmehr ist das Angleichen auch erfolgt, wenn die Spannungen der Netzabschnitte und die Vorladespannung eine Spannungsdifferenz mit einem Wert im Bereich von vorzugsweise 10% bis 20% der Einspeisespannung aufweisen. Gemäß einer besonders bevorzugten Ausgestaltung weisen die Netzabschnitte nach dem Angleichen eine bis auf bauteilbedingte Schwankungen exakt gleiche Spannung auf.

Vorzugsweise ist ergänzend auch vorgesehen, dass zu einem schnelleren Angleichen der unterschiedlichen Spannungen der Netzabschnitte die Vorladespannung während der Vorladung gesteigert wird. Die Steigerung der Vorladespannung erfolgt beispielsweise linear. Alternativ erfolgt die Steigerung nach Art einer Treppenform.

Der Steigerung der Vorladespannung liegt die Überlegung zugrunde, die Umladeströme möglichst schnell abfließen zu lassen. Hierfür werden zu Beginn der Vorladung die Netzabschnitte über den steuerbaren Spannungsgeber zusammengeschaltet. Somit ist ein Abfließen der unerwünschten Umladeströme ermöglicht. Die durch den Spannungsgeber über die Vorladeleitung eingespeiste Vorladespannung begrenzt die Umladeströme in ihrer Höhe, sodass diese abfließen ohne die Bauteile der Netzabschnitte zu schädigen und / oder zu zerstören.

Durch die Steigerung der Vorladespannung verkürzt sich die Zeit für das Abfließen der Umladeströme und das Angleichen der unterschiedlichen Spannungsniveaus der Netzabschnitte im Vergleich zu einer Zeit, die beispielsweise für eine Begrenzung der Umladeströme mittels der resistiven Strombegrenzung benötigt wird. Beispielsweise verkürzt sich das Abfließen der Umladeströme durch die Steigerung der Vorladespannung um vorzugsweise 50% im Vergleich zu der Variante der resistiven Strombegrenzung mittels der Überbrückungsschaltung (Bei beiden Varianten weist zur Bestimmung des Zeitunterschiedes der begrenzte Strom einen gleichen Wert auf).

Bevorzugt ist der steuerbare Spannungsgeber als ein Gleichspannungswandler, insbesondere als ein Tiefsetzsteller ausgebildet. Der Tiefsetzsteller weist eine Eingangsseite und eine Ausgangsseite auf.

Die Ausgestaltung des Spannungsgebers als Tiefsetzsteller hat den Vorteil, dass eine einfache und verlustfreie Regelung, insbesondere die Steigerung der Vorladespannung realisiert ist. Die verlustfreie Regelung beruht auf einer widerstandslosen Bauweise des Tiefsetzstellers. Unter widerstandslos wird vorliegend entgegen dem allgemeinen Sprachgebrauch eine Bauweise des Tiefsetzstellers verstanden, welcher insbesondere keinen ohm'schen Widerstand in einem Leistungspfad aufweist. Unter Leistungspfad wird hierbei ein Strompfad und / oder mehrere Strompfade eines elektrotechnischen Bauteils verstanden, welcher / welche die Leistung des Bauteils und / oder durch das Bauteil übertragen.

Der Gleichspannungswandler, insbesondere der Tiefsetzsteller, weist typischerweise an der Eingangsseite eine Eingangsspannung zu seiner Versorgung auf. Die Eingangsspannung ist die maximale Spannung, die der Gleichspannungswandler ausgangsseitig (ein-)stellen kann.

Alternativ ist der steuerbare Spannungsgeber als ein potentialtrennender Steller ausgebildet. Ein potentialtrennender Steller weist beispielsweise neben den Bauteilen eines gewöhnlichen Tiefsetzstellers und / oder anstelle eines Bauteils eines Tiefsetzstellers ein potentialtrennendes Bauteil, beispielsweise einen Transformator auf.

Zweckdienlicherweise wird der steuerbare Spannungsgeber, insbesondere der Tiefsetzsteller von der Einspeiseeinheit gespeist. Mit anderen Worten: Der Tiefsetzsteller ist über eine Versorgungsleitung an die Einspeiseeinheit angeschlossen.

Der Vorteil ist in dem einfachen schaltungstechnischen Aufwand zu sehen, welcher zum einen Material und zum anderen Kosten spart.

Alternativ wird der steuerbare Spannungsgeber von einer externen Spannungsquelle, beispielsweise einer Batterie gespeist. Unter extern wird hierbei verstanden, dass die Spannungsquelle, welche den Spannungsgeber versorgt, kein Teil des DC-Netzes ist. Ebenfalls ist auch eine Versorgung des Spannungsgebers mittels einer internen Spannungsquelle, beispielsweise einer Versorgung einer Signalverarbeitung denkbar. Hierbei gilt es zu beachten, dass bei der Ausgestaltung des steuerbaren Spannungsgebers ohne Potentialtrennung die Spannungsquelle der alternativen Versorgung des Spannungsgebers zwingend eine Spannung mit einem Wert liefern kann, welcher bevorzugt zumindest bis auf eine Toleranz im Bereich von 10% bis 20% dem Wert der Einspeisespannung der Einspeiseeinheit entspricht.

Gemäß der alternativen Ausbildung des Spannungsgebers als potentialtrennender Steller, beispielsweise mittels eines Transformators, ist mit Hilfe einer geeigneten Wahl der Windungszahlen der Wicklungen und somit des Übersetzungsverhältnisses des Transformators ein Spannungsunterschied auch außerhalb der oben genannten Toleranz ausgleichbar.

Um die abfließenden Umladeströme möglichst auf ein Minimum zu reduzieren, wird im zeitlichen Verlauf der Vorladung die Vorladespannung bevorzugt auf den Wert einer Einspeisespannung der Einspeiseeinheit gesteigert. Somit werden die unterschiedlichen Spannungsniveaus der Netzabschnitte an das Spannungsniveau der Einspeisespannung angeglichen.

Hierdurch ist nach der Vorladung eine geringe Spannungsdifferenz zwischen den vorgeladenen Netzabschnitten und der Einspeiseeinheit gewährleistet, sodass entweder die noch fließenden Umladeströme keine schädigende Wirkung mehr aufweisen oder keine Umladeströme mehr fließen.

Die Vorladung der Netzabschnitte mit der Einspeisespannung der Einspeiseeinheit erfolgt insbesondere durch den von der Einspeiseeinheit gespeisten Tiefsetzsteller. Hierzu wird zunächst der Tiefsetzsteller von der Einspeiseeinheit mit der Einspeisespannung versorgt. Anschließend lädt der Tiefsetzsteller die Netzabschnitte mit der Vorladespannung vor, welche er im zeitlichen Verlauf der Vorladung auf den Wert der Einspeisespannung steigert. Nach der Vorladung ist somit eine optimale Schaltbedingung geschaffen. Anschließend schaltet sich der Tiefsetzsteller ab und die Netzabschnitte werden mit der Einspeiseeinheit zusammengeschaltet. Unter optimaler Schaltbedingungen wird hierbei ein Zustand des DC-Netzes verstanden, bei dem ein störungsfreies Zusammenschalten der Einspeiseeinheit mit den Netzabschnitten erfolgen kann.

Gemäß einer zweckdienlichen Ausgestaltung wird die Vorladespannung insbesondere in das Schaltelement eines jeden Netzabschnittes gespeist. Bevorzugt ist daher die Ladeleitung derart an dem Schaltelement angeordnet, dass sie zwischen dem elektronischen Schalter und dem galvanischen Schalter angeschlossen ist. Durch diese Anordnung der Ladeleitung ist zum einen das Trennen eines Netzabschnittes von der Strombegrenzereinheit und somit von der Vorladung und zum anderen eine Vorladung eines Netzabschnittes, welcher von der Einspeiseeinheit getrennt ist ermöglicht.

Gemäß einer zweiten Ausgestaltungsvariante werden die Umladeströme nach einem Trennen der Einspeiseeinheit von den Netzabschnitten durch ein gesteuertes und / oder steuerbares Entladen der geladenen Energiespeicher der Netzabschnitte begrenzt.

Die Entladung der Netzabschnitte erfolgt sinngemäß analog zur Vorladung gemäß der ersten Ausgestaltungsvariante. Ein Unterschied besteht darin, dass die unterschiedlichen Spannungen der Netzabschnitte gemäß der zweiten Ausgestaltungsvariante über einen elektrischen Verbraucher abfallen und somit die Umladeströme kontrolliert abfließen und die Energie der Energiespeicher der Netzabschnitte innerhalb des elektrischen Verbrauchers, beispielsweise in Wärme umgewandelt wird.

Zur Ausbildung der Steuerbarkeit ist der elektrische Verbraucher, beispielsweise in einer einfachsten Ausgestaltungsform ein ohm'scher Widerstand, mittels eines Schalters, vorzugsweise eines elektronischen Schalters an die Netzabschnitte angeschlossen. Mit Hilfe des Schalters werden die abfließenden Umladeströme begrenzt, sodass diese ohne die Bauteile des DC-Netzes zu beschädigen über den elektrischen Verbraucher abfließen können.

Das gesteuerte Abfließen der Umladeströme ermöglicht eine optimale Anpassung an das DC-Netz, auch bei einer Erweiterung des DC-Netzes um weitere Netzabschnitte.

Weiterhin erfolgt durch das Entladen ein Angleichen der unterschiedlichen Spannungsniveaus der Netzabschnitte auf ein definiertes Spannungsniveau, beispielsweise das Nullpotential.

Ergänzend hierzu ist optionalerweise auch eine sich an die Entladung anschließende Vorladung der Netzabschnitte vorgesehen, um ein erneutes Zusammenschalten der Netzabschnitte mit der Einspeiseinheit zu ermöglichen.

Die Verteilerleitung weist eine Entladeleitung auf. Weiterhin erfolgt das Entladen der Netzabschnitte mittels einer zentralen Entladeeinheit. Die Entladeeinheit weist vorzugsweise den elektrischen Verbraucher und / oder den Schalter auf. Die Entladeleitung ist an alle Netzabschnitte angeschlossen und hierzu parallel zur Einspeiseleitung angeordnet. Weiterhin sind die Entladeeinheit und die Entladeleitung elektrisch miteinander verbunden.

Der Vorteil ist, dass mittels der Entladeleitung alle Netzabschnitte des DC-Netzes über die zentrale Entladeeinheit entladen werden. Unter zentral wird hierbei verstanden, dass das DC-Netz lediglich eine Entladeeinheit aufweist, welche zum Entladen aller Netzabschnitte des DC-Netzes ausgebildet ist. Dies ermöglicht eine aufwandsarme Realisierung der Entladung der Netzabschnitte.

Gemäß einer bevorzugten Weiterbildung ist die Entladeeinheit als ein steuerbarer Entladesteller ausgebildet. Der Entladesteller weist einen elektronischen Schalter, vorzugsweise einen Transistor und einen elektrischen Verbraucher, vorzugsweise einen ohm'schen Widerstand auf.

Nach dem Trennen der Netzabschnitte von der Einspeiseeinheit fließen die Umladeströme somit in ihrem Wert begrenzt über den steuerbaren Entladesteller ab und die unterschiedlichen Spannungsniveaus der Netzabschnitte werden angeglichen.

Der Vorteil dieser Ausgestaltung ist in der einfachen Funktionsweise zum Erreichen angeglichener Spannungsniveaus der Netzabschnitte und somit einer optimalen Schaltbedingung zum (erneuten) Zusammenschalten der Netzabschnitte mit der Einspeiseeinheit zu sehen. Unter angeglichenen Spannungen wird analog zur zuvor genannten ersten Variante nicht zwingend ein exakt gleicher Wert der unterschiedlichen Spannungen der Netzabschnitte verstanden, sondern vielmehr eine Annäherung der einzelnen Spannungen der Netzabschnitte an einen Spannungswert.

Bevorzugt wird die Strombegrenzung bei der ersten und / oder der zweiten Ausgestaltungsvariante mittels einer Fernsteuerung, beispielsweise mittels einer Remote-Verbindung gesteuert. Der Vorteil liegt darin, dass beispielsweise mehrere DC-Netze von einer Schaltzentrale aus gesteuert werden können.

Vorzugsweise weist das DC-Netz sowohl die erste Variante der Umladestrombegrenzung mittels der Vorladung als auch die zweite Variante der Umladestrombegrenzung mittels der Entladung der Netzabschnitte auf. Hierzu ist die Verteilerleitung vorzugsweise als eine kombinierte Leitung ausgebildet, welche die Vorladeleitung und die Entladeleitung aufweist.

Die Aufgabe wird erfindungsgemäß weiterhin gelöst durch ein Gleichstrom-Netz (DC-Netz) mit den Merkmalen des Anspruchs 10.

Das DC-Netz weist eine Einspeiseeinheit mit einer Einspeiseleitung sowie mehrere Netzabschnitte auf. Die Netzabschnitte sind über Schaltelemente mit der Einspeiseeinheit trennbar verbunden. Vorzugsweise weist das Schaltelement einen Leistungsschalter, beispielsweise einen Transistor und einen galvanischen Schalter zur Potentialtrennung des Netzabschnittes von der Einspeiseinheit auf.

Zur Begrenzung von Umladeströmen, die aufgrund eines Spannungsunterschiedes innerhalb der Netzabschnitte auftreten, weist das elektrische Versorgungsnetz eine steuerbare Strombegrenzereinheit auf. Unter steuerbar wird vorliegend verstanden, dass die Strombegrenzereinheit derart ausgebildet ist, dass zur Begrenzung der Umladeströme diese mittels der Strombegrenzereinheit in seiner Höhe variiert wird und / oder variierbar ist. D.h. ein maximal zulässiger Wert der fließenden Umladeströme ist mittels der Strombegrenzereinheit eingestellt und / oder einstellbar.

Hierdurch ist eine Anpassung der Strombegrenzereinheit an das DC-Netz gewährleistet, derart, dass auch bei Veränderungen innerhalb des DC-Netzes, beispielsweise durch einen Ausbau des DC-Netzes mit weiteren Netzabschnitten lediglich eine Anpassung der Strombegrenzereinheit hinsichtlich des maximal zulässigen Wertes der Umladeströme erfolgt.

Die Strombegrenzereinheit weist eine zusätzliche Verteilerleitung auf und ist mittels dieser mit den Netzabschnitten verbunden.

Um alle in den Netzabschnitten des elektrischen Versorgungsnetzes auftretenden Umladeströme mit der Strombegrenzereinheit zu begrenzen, ist die Verteilerleitung vorzugsweise parallel zur Einspeiseleitung geschaltet.

Die Begrenzung der Umladeströme erfolgt insbesondere mit Hilfe einer Vorladung der Netzabschnitte, sodass die unterschiedlichen Spannungen der Netzabschnitte angeglichen werden. Hierzu weist die Strombegrenzereinheit einen steuerbaren Spannungsgeber und die Verteilerleitung eine Ladeleitung für ein Vorladen der Netzabschnitte mit einer Vorladespannung auf. Die Vorladung erfolgt im Betrieb des steuerbaren Spannungsgebers.

Der steuerbare Spannungsgeber ist dabei derart ausgebildet, dass die Vorladespannung während der Vorladung einen in ihrem Wert gesteigerten Verlauf aufweist, bis sie an einen Wert einer Einspeisespannung der Einspeiseeinheit angeglichen ist, insbesondere einen gleichen Wert wie die Einspeisespannung aufweist. Unter der Einspeisespannung wird hierbei eine Spannung verstanden, mit der das elektrische Versorgungsnetz gespeist ist.

Bevorzugt ist der steuerbare Spannungsgeber als ein Tiefsetzsteller ausgebildet. Diese Ausgestaltung hat den Vorteil, dass mittels des Tiefsetzstellers eine verlustarme Vorladung der Netzabschnitte realisiert ist, da der Tiefsetzsteller eine widerstandslose Bauweise aufweist. Unter widerstandslos wird hierbei entgegen dem allgemeinen Sprachgebrach verstanden, dass der Tiefsetzsteller insbesondere keine ohm'schen Widerstände in einem Leistungspfad aufweist. Ein weiterer Vorteil ist in einer einfachen Realisierung der Steigerung der Vorladespannung durch eine Änderung eines Tastgrades des Tiefsetzstellers zu sehen.

Über den Tastgrad des Tiefsetzstellers ist eine Einstellung einer Ausgangsspannung - hier die Vorladespannung - ermöglicht, welche einem Vielfachen einer Eingangsspannung des Tiefsetzstellers entspricht. Hierbei weist das Vielfache der Eingangsspannungen Werte in einem Bereich zwischen 0 und 1 oder, relativ betrachtet, Werte in einem Bereich zwischen 0% und 100% auf. Beispielsweise weist ein Tiefsetzsteller, bei dem einem Tastgrad von 0,5 eingestellt ist, eine Ausgangsspannung auf, deren Wert die Hälfte des Wertes der Eingangsspannung aufweist.

Weiterhin weist der Spannungsgeber bevorzugt als Eingangsspannung eine Einspeisespannung der Einspeiseeinheit auf. Der Versorgung des Tiefsetzstellers durch die Einspeisespannung der Einspeiseeinheit liegt die Überlegung zugrunde, dass der Tiefsetzsteller hierdurch derart ausgelegt ist, dass die Spannungen der Netzabschnitte nach der Vorladung an die Einspeisespannung der Einspeiseeinheit angeglichen ist und somit eine optimale Schaltbedingung zum Zusammenschalten der Netzabschnitte mit der Einspeiseeinheit aufweisen.

Alternativ weist der Tiefsetzsteller eine Versorgung durch eine Spannungsquelle, beispielsweise einer Spannungsversorgung einer Signalverarbeitung auf.

Die Strombegrenzereinheit weist eine Entladeeinheit und die Verteilerleitung eine Entladeleitung zu einem strombegrenzten Entladen von Netzabschnitten auf, welche von der Einspeiseeinheit getrennt sind. Durch das Entladen wird einem Angleichen der unterschiedlichen Spannungen der Netzabschnitte auf einfache Weise Rechnung getragen. Weiterhin liegt dieser Ausgestaltung die Überlegung zugrunde, dass zu einem Entladen der Energiespeicher aller Netzabschnitte das DC-Netz lediglich eine Entladeeinheit aufweist. Hierdurch sind zudem Vorteile bezüglich der Einrichtungs- und Betriebskosten des elektrischen Versorgungsnetzes gewährleistet.

Insbesondere ist die Entladeinheit als ein steuerbarer Entladesteller ausgebildet. Diese Weiterbildung hat den Vorteil, dass mit Hilfe des steuerbaren Entladestellers eine einfache sowie geregelte und / oder regelbare Strombegrenzung realisiert ist. Zur Regelung und / oder Regelbarkeit weist der steuerbare Entladesteller vorzugsweise einen Schalter, insbesondere einen Transistor auf.

Gemäß einer alternativen Ausgestaltung sind mehrere Strombegrenzereinheiten, beispielsweise pro Schaltschrank, an die Gleichstromversorgung angeschlossen, welche einen kaskadierten Aufbau aufweisen. Hierzu weist vorzugsweise eine Strombegrenzereinheit eines jeweils nachgeordneten Netzabschnittes eine Speisung aus einem jeweils übergeordneten Netzabschnitt auf. Weiterhin sind an jede Strombegrenzereinheit vorzugsweise mehrere Netzabschnitte angeschlossen.

Bevorzugt weist die Ladeleitung und / oder die Entladeleitung eine Entkoppeldiode auf. Zweckdienlicherweise ist die Entkopplediode an einem Anschluss der Ladeleitung und / oder der Entladeleitung an dem jeweiligen Schaltelement angeordnet. Die Anordnung einer Entkoppeldiode hat, entsprechend vorliegend ihrer Bezeichnung, den Vorteil, dass die einzelnen Netzabschnitte voneinander entkoppelt sind. Unter Entkoppeln wird hierbei vorliegend verstanden, dass sich die Netzabschnitte beim Vorladen oder Entladen nicht gegenseitig durch Umladeströme beeinflussen.

Die im Hinblick auf das Verfahren aufgeführten Vorteile und bevorzugten Ausgestaltungen sind sinngemäß auf das DC-Netz zu übertragen und umgekehrt.

Ausführungsbeispiele der Erfindung werden nachfolgend anhand der Figuren näher erläutert. Diese zeigen teilweise in stark vereinfachten Darstellungen:
- FIG 1: einen Schaltplan eines Gleichstrom-Netzes (DC-Netz)
- FIG 2: ein Schaltelement mit einer angeschlossenen Ladeleitung,
- FIG 3: einen steuerbaren Spannungsgeber,
- FIG 4: einen steuerbaren Entladesteller sowie
- FIG 5: ein Schaltelement mit angeschlossener Lade-und Entladeleitung.

In den Figuren sind gleichwirkende Teile mit den gleichen Bezugszeichen dargestellt.

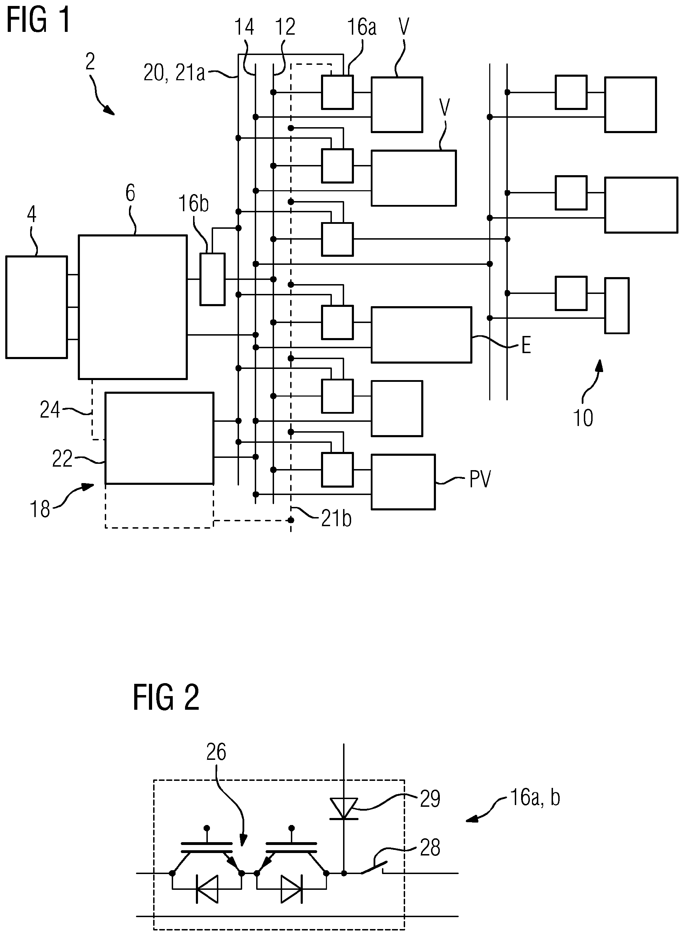

In FIG 1 ist ein Gleichstrom-Netz (DC-Netz) 2, insbesondere für Industrieanlagen dargestellt, welche eine Gleichstromnetz 2 (DC-Netz) aufweist.

Das Gleichstrom-Netz 2 weist zusätzlich einen Anschlusseinheit 4 zu einem Anschluss an ein Netz, beispielsweise ein Drehstromnetz auf. An die Anschlusseinheit 4 schließt sich eine Einspeiseeinheit 6 an, in der typischerweise der Drehstrom in einen Gleichstrom gleichgerichtet und dann in das DC-Netz 2 eingespeist wird. Das DC-Netz 2 weist mehrere mit der Einspeiseeinheit 6 verbundene Netzabschnitte 8 sowie, im Ausführungsbeispiel, ein Subnetz 10 auf. Ein Subnetz 10 weist wiederum mehrere Netzabschnitte 8 auf. Netzabschnitte 8 sind beispielsweise elektrische Verbraucher V, Energiespeicher E oder Photovoltaik-Anlagen PV. Die Netzabschnitte 8 sind mittels einer Einspeiseleitung 12 mit der Einspeiseeinheit 6 verbunden. Über die Einspeiseleitung 12 fließt der elektrische Gleichstrom in die einzelnen Netzabschnitte 8. Über eine Masseleitung 14 fließt der Gleichstrom anschließend zurück zur Einspeiseeinheit 6.

Um das DC-Netz 2 beziehungsweise die Netzabschnitte 8 vor Überspannungen und / oder Überströmen zu schützen, weist jeder Netzabschnitt 8 ein Schaltelement 16a auf. Analog dazu ist zwischen der Einspeiseeinheit 6 und der Einspeiseleitung 12 ein Hauptschaltelement 16b geschaltet. Das Hauptschaltelement 16b und die Schaltelemente 16a weisen technisch den gleichen Aufbau auf. Das Hauptschaltelement 16b ermöglicht ein Trennen des gesamten DC-Netzes 2 von der Anschlusseinheit 4, beispielsweise im Fall einer Notabschaltung oder zu Wartungszwecken.

Das DC-Netz 2 weist eine Strombegrenzereinheit 18 auf, welche über eine Verteilerleitung 20 mit allen Netzabschnitten 8 und Subnetzen 10 des DC-Netzes 2 verbunden ist. Die Verteilerleitung 20 ist im Ausführungsbeispiel parallel zur Einspeiseleitung 12 und parallel zur Masseleitung 14 geschaltet.

Nach einem Trennen der Netzabschnitte 8 von der Einspeiseeinheit 6, beispielsweise über das Hauptschaltelement 16b resultieren aufgrund unterschiedlicher Spannungen Umladeströme innerhalb des DC-Netzes 2, sofern die Netzabschnitte 8 erneut mit der Einspeiseeinheit 6 zusammengeschaltet werden. Unkontrollierte und / oder in ihrem Wert unbegrenzte Umladeströme können die Komponenten des DC-Netzes 2 beschädigen und / oder zerstören. Um die Umladeströme kontrolliert abfließen zu lassen, sind die Netzabschnitte 8 gemäß einer ersten Variante zweckdienlicherweise zunächst vor einem erneuten Zusammenschalten mit der Einspeiseeinheit 6 über die Strombegrenzereinheit 18 zusammengeschaltet. Hierdurch erfahren die Umladeströme eine Strombegrenzung.

Die Strombegrenzereinheit 18 ist derart ausgebildet, dass die Netzabschnitte 8 über die Verteilerleitung 20, welche gemäß der ersten Variante eine Ladeleitung 21a aufweist, eine Vorladung mit einer Vorladespannung erfahren. Die Vorladespannung wird während der Vorladung in ihrem Wert gesteigert, bis sie an einen Wert einer Einspeisespannung der Einspeiseeinheit 6 angeglichen ist. Unter Einspeisespannung wird hierbei die Spannung verstanden, welche von der Einspeiseeinheit 6 in das DC-Netz 2 gespeist wird. Nach dem Angleichen der Spannungen der Netzabschnitte erfolgt ein störungsfreies Zusammenschalten der Netzabschnitte 8 mit der Einspeiseeinheit 6.

Zur Einstellung und / oder zur Steuerung der Vorladespannung weist die Strombegrenzereinheit 18 einen Gleichspannungswandler, im Ausführungsbeispiel insbesondere einen Tiefsetzsteller 22 und alternativ einen potentialtrennenden Steller auf. Der Tiefsetzsteller 22 weist im Ausführungsbeispiel eine Versorgung 24 durch die Einspeiseeinheit 6 auf.

Im Ausführungsbeispiel wird die Vorladespannung für einen jeweiligen Netzabschnitt in das dazugehörige Schaltelement 16 eingespeist. Der Vorteil dieser Ausgestaltung ist ein Trennen eines Netzabschnittes 8, welcher keine Vorladung erfahren soll, da dieser beispielsweise nicht erneut an die Einspeiseeinheit 6 zugeschaltet wird.

Ein Schaltbild eines derartigen Schaltelements 16a,b ist in FIG 2 dargestellt.

Das Schaltelement 16a,b weist sowohl elektronische Schalter 26, beispielsweise Transistoren als auch potentialtrennende Schalter 28 auf. Beide Schalter 26,28 weisen leistungselektronische Unterschiede auf. Elektronische Schalter 26 sind wegen ihrer hohen Leistungsdichte und Schaltzeiten mit Werten im Bereich von einigen Nanosekunden vorzugsweise zu einem Schalten von elektrischer Leistung ausgelegt. Ihre Isolierwirkung ist jedoch hinsichtlich einer Potentialtrennung unzureichend. Aus diesem Grund weisen die Schaltelemente 16a,b zusätzlich potentialtrennende Schalter 28 auf.

Im Ausführungsbeispiel ist die Vorladespannung über die Ladeleitung 21a in das Schaltelement 16a,b eingespeist. Vorzugsweise ist die Ladeleitung 21a in dem Schaltelement 16a,b zwischen dem elektronischen Schalter 26 und dem potentialtrennenden Schalter 28 angeschlossen. Diese Anordnung der Ladeleitung 21a ermöglicht eine Vorladung der Netzabschnitte 8 bei noch durch den potentialtrennenden Schalter 28 von der Einspeiseeinheit 6 getrennten Netzabschnitten 8. Nach der Vorladung und somit dem Angleichen der Spannungsniveaus der Netzabschnitte 8 mit dem Spannungsniveau der Einspeisespannung, werden die Netzabschnitte 8 durch den potentialtrennenden Schalter 28 mit der Einspeiseeinheit 6 zusammengeschaltet. Die Ladeleitung 21a weist weiterhin eine Entkoppeldiode 29 zu einem Entkoppeln der einzelnen Netzabschnitte 8 voneinander auf.

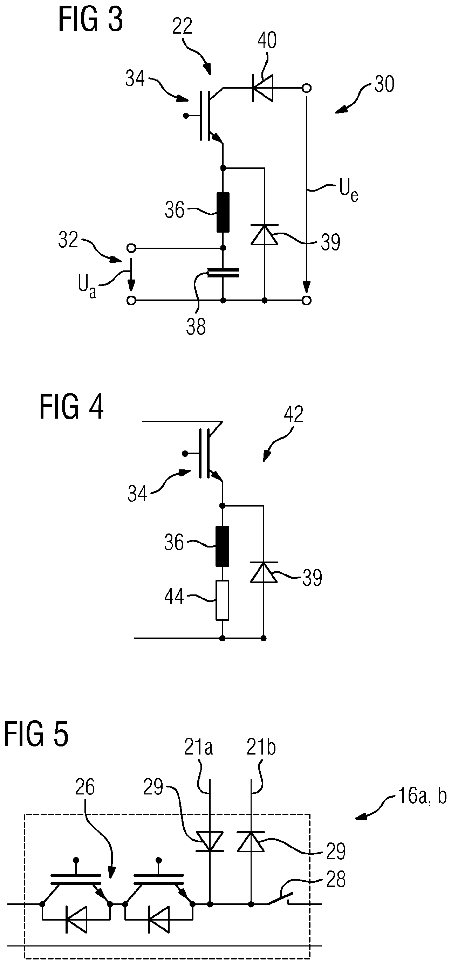

In FIG 3 ist ein Schaltbild eines Tiefsetzstellers 22 dargestellt.

Der Tiefsetzsteller 22 weist eine Eingangsseite 30 für eine Eingangsspannung Ue (im Ausführungsbeispiel die Einspeisespannung der Einspeiseeinheit 6) und eine Ausgangsseite 32 für eine Ausgangsspannung Uₐ (im Ausführungsbeispiel die Vorladespannung) auf.

Weiterhin weist der Tiefsetzsteller 22 einen Schalter 34, vorzugsweise einen Halbleiterschalter und insbesondere einen Transistor sowie eine Spule 36 und einen Kondensator 38 auf.

Die Funktionsweise des Tiefsetzstellers 22 ergibt sich wie folgt: Bei einem Schließen des Schalters 34 speist die an die Eingangsseite 3 angelegte Eingangsspannung Uₑ eine an die Ausgangsseite 32 angelegte Last mit der Ausgangsspannung Uₐ. Im Ausführungsbeispiel entsprechen die an den Tiefsetzsteller 22 angeschlossenen Netzabschnitte 8 der Last. Durch eine, im Ausführungsbeispiel nicht aufgeführte und näher erläuterte Steuerung wird der Schalter 34 alternierend geschlossen und geöffnet. Während der Schalter 34 geöffnet ist, speisen die beiden Energiespeicher Spule 36 und Kondensator 38 über eine Richtungsdiode 39 die Last. Die an der Ausgangsseite 32 anliegende Ausgangsspannung Uₐ ist somit in Abhängigkeit eines Tastgrades α eingestellt und / oder einstellbar. Der Tastgrad definiert ein Verhältnis zwischen einer Impulsdauer zu einer Periodendauer. D.h. der Tastgrad α gibt im Ausführungsbeispiel an, über welchen Anteil einer Periodendauer der Schalter 34 geschlossen ist. Der Tastgrad α weist somit Werte im Bereich von 0 bis 1 beziehungsweise relativ betrachtet im Bereich zwischen 0% und 100% auf. Weist der Tastgrad α beispielsweise einen Wert von 0,5 auf, so ist der Schalter 34 die Hälfte der Zeit der Periodendauer geschlossen.

Mit anderen Worten: Die an der Ausgangsseite 32 anliegende Ausgangspannung Uₐ variiert zwischen 0V (entspricht einem Tastgrad von 0; d.h. der Schalter 34 weist über die Periodendauer eine offene Stellung auf) und dem Wert der Eingangsspannung (entspricht einem Tastgrad von 1; d.h. der Schalter 34 weist über die Periodendauer eine geschlossene Stellung auf) .

Gemäß der ersten Ausgestaltungsvariante werden die Netzabschnitte 8 mit einer Vorladespannung vorgeladen. Schaltungstechnisch wird die Vorladung derart realisiert, dass der Tiefsetzsteller 22 im Betrieb einen variierenden, insbesondere im Wert steigenden Tastgrad α aufweist, sodass zu Beginn der Vorladung ausgangsseitig eine Ausgangsspannung, welche der Vorladespannung entspricht, mit einem Wert von 0V anliegt, welche während der Vorladung durch einen steigenden Tastgrad α auf den Wert der Eingangsspannung des Tiefsetzstellers 22, welche der Einspeisespannung entspricht gesteigert wird.

Um den Tiefsetzsteller 22, insbesondere den Schalter 34 in einem Spannungs-Fehlerfall zu schützen, weist der Tiefsetzsteller 22 eine Schutzdiode 40 auf.

In FIG 4 ist gemäß einer zweiten Ausgestaltungsvariante ein Schaltbild eines Entladestellers 42 dargestellt.

Analog zu der ersten Variante der Vorladung der Netzabschnitte 8 erfolgt gemäß der zweiten Variante durch eine Entladung der von der Einspeiseeinheit 6 getrennten Netzabschnitte 8 ein Angleichen der unterschiedlichen Spannungen der Netzabschnitte 8.

Die Entladung der Netzabschnitte 8 erfolgt über den in FIG 3b dargestellten Entladesteller 42. Der Entladesteller 42 weist ebenfalls einen Schalter 34, vorzugsweise einen Halbleiterschalter und insbesondere einen Transistor sowie eine Spule 36 und einen Widerstand 44, bevorzugt einen ohm'schen Widerstand auf.

Die Funktionsweise des Entladestellers 42 ergibt sich wie folgt: Nach dem Trennen der Netzabschnitte 8 von der Einspeiseeinheit 6 weisen diese verschiedene Spannungen und somit verschiedene gespeicherte Energien auf. Zum Entladen der Netzabschnitte wird der Schalter 34 des Entladestellers 42 geschlossen. Die fließenden Umladeströme, welche die Leistung aus den Energiespeichern in den Widerstand 44 "transferieren" sind durch die Steuerbarkeit des Schalters 34 begrenzt, sodass ein kontrolliertes Abfließen der Umladeströme erfolgt. Nach einem Öffnen des Schalters 34 fließt der noch im Entladesteller 42 vorhandene Umladestrom über eine Richtungsdiode 39 erneut durch den Widerstand 44 und gibt dort Energie, typischerweise in Form von Wärme ab.

In FIG 5 ist ein Schaltbild eines Schaltelementes 16a,b mit angeschlossener Ladeleitung 21a und einer Entladeleitung 21b. Die Entladeleitung 21b ist in ihrer Funktionsweise analog zur Ladeleitung 21a zu sehen. Über die Entladeleitung 21b sind die Netzabschnitte 8 mit dem Entladesteller 42 verbunden, sodass dieser als zentrale Entladeeinheit zum Entladen aller Netzabschnitte 8 des DC-Netzes 2 ausgebildet ist.

Gemäß FIG 5 weist das Schaltelement 16a,b einen elektronischen Schalter 26 und einen potentialtrennenden Schalter 28 auf. Analog zu dem Schaltelement 16a,b aus FIG 2 sind die Ladeleitung 21a und die Entladeleitung 21b zwischen den elektronischen Schalter 26 und den potentialtrennenden Schalter 28 angeschlossen. Dieser Anschluss ermöglicht erfindungsgemäß entweder eine Vorladung oder ein Entladen der Netzabschnitte 8 bei getrennter Einspeiseeinheit 6. Sowohl die Ladeleitung 21a als auch die Entladeleitung 21b weisen eine in entgegengesetzte Richtungen leitende Entkoppeldioden 29 auf. Die Entkoppeldioden 29 sind, analog zu dem Schaltelement aus FIG 2 zum Entkoppeln der einzelnen Netzabschnitte 8 voneinander angeordnet.

Zweckdienlicherweise sind die Ladeleitung 21a und die Entladeleitung 21b gemeinsam in einem Kabel angeordnet. Bei einer kombinierten Ausgestaltung aus Vorladung und Entladen der Netzabschnitte 8 erfolgt beispielsweise nach einem Entladen der Netzabschnitte 8 eine Vorladung der Netzabschnitte 8 bevor diese erneut mit der Einspeiseeinheit 6 zusammengeschaltet werden.

## Patentansprüche

1. Verfahren zum Betrieb eines Gleichstrom-Netzes (2), welches mehrere über jeweils ein Schaltelement (16a,b) trennbar verbundene Netzabschnitte (8) und eine Einspeiseeinheit (6) aufweist, wobei nach einem Trennen der Netzabschnitte (8) von der Einspeiseeinheit (6) und vor einem Zusammenschalten der Netzabschnitte (8) mit der Einspeiseeinheit (6) Umladeströme, welche zwischen den Netzabschnitten (8) oder zwischen der Einspeiseeinheit (6) und den Netzabschnitten (8) aufgrund unterschiedlicher Spannungsniveaus fließen, mit Hilfe einer steuerbaren Strombegrenzereinheit (18) begrenzt werden, wobei
- die Einspeiseeinheit (6) mit dem Gleichstrom-Netz (2) über eine Einspeiseleitung (12) und die Strombegrenzereinheit (18) mit den Netzabschnitten (8) über eine gemeinsame zusätzliche Verteilerleitung (20) verbunden ist, derart, dass die steuerbare Strombegrenzereinheit (18) die Umladeströme über die gemeinsame zusätzliche Verteilerleitung (20) begrenzt,
**dadurch gekennzeichnet, dass**
- die Umladeströme nach einem Trennen der Einspeiseeinheit (6) von den Netzabschnitten (8) durch ein gesteuertes Entladen der Netzabschnitte (8) begrenzt werden und hierzu die Verteilerleitung (20) eine Entladeleitung (21b) aufweist und die Begrenzung der Umladeströme durch ein Entladen der Netzabschnitte (8) mittels einer Entladeeinheit über die Entladeleitung (21b) erfolgt.

2. Verfahren nach dem vorhergehenden Anspruch, wobei die Strombegrenzereinheit (18) als ein steuerbarer Spannungsgeber ausgebildet ist und die Verteilerleitung (20) eine Ladeleitung (21a) aufweist über die die Netzabschnitte (8), die nach dem Trennen und vor dem Zusammenschalten unterschiedliche Spannungsniveaus aufweisen, eine Vorladung mit einer Vorladespannung erfahren, derart, dass die unterschiedlichen Spannungsniveaus zur Begrenzung der Umladeströme angeglichen werden.

3. Verfahren nach dem vorhergehenden Anspruch, wobei während der Vorladung eine Vorladespannung gesteigert wird.

4. Verfahren nach einem der Ansprüche 2 oder 3, wobei der steuerbare Spannungsgeber als ein Gleichspannungswandler, insbesondere als ein Tiefsetzsteller (22) ausgebildet ist.

5. Verfahren nach einem der Ansprüche 2 bis 4, wobei der steuerbare Spannungsgeber von der Einspeiseeinheit (6) gespeist wird.

6. Verfahren nach einem der Ansprüche 2 bis 5, wobei die Vorladespannung derart gesteigert wird, sodass sie nach der Vorladung an den Wert einer Einspeisespannung der Einspeiseeinheit angeglichen ist.

7. Verfahren nach einem der Ansprüche 2 bis 6, wobei die Vorladespannung zum Vorladen der Netzabschnitte (8) an einem jeweiligen Schaltelement (16a,b) in die Netzabschnitte gespeist wird.

8. Verfahren nach einem der vorhergehenden Ansprüche, wobei die Entladeeinheit als ein steuerbarer Entladesteller (42) ausgebildet ist, derart, dass nach dem Trennen der Netzabschnitte (8) von der Einspeiseeinheit (6) zum Entladen die Umladeströme in ihrem Wert begrenzt über den Entladesteller (42) abfließen, derart, dass die Spannungen der Netzabschnitte (8) angeglichen werden.

9. Verfahren nach einem der vorhergehen Ansprüche, wobei die Strombegrenzung mittels einer Fernsteuerung gesteuert wird.

10. Gleichstrom-Netz (2), welches eine Einspeiseeinheit (6) mit einer Einspeiseleitung (12) und mehrere über Schaltelemente (16a,b) von der Einspeiseeinheit (6) trennbar verbundene Netzabschnitte (8) aufweist, wobei zusätzlich zur Einspeiseeinheit (6) eine steuerbare Strombegrenzereinheit (18) an die Netzabschnitte (8) angeschlossen ist, wobei
- die Strombegrenzereinheit (18) dazu ausgebildet ist, im Betrieb Umladeströme zu begrenzen, die aufgrund eines Spannungsunterschiedes zwischen den Netzabschnitten (8) oder zwischen der Einspeiseeinheit (6) und den Netzabschnitten (8) auftreten,
- die Strombegrenzereinheit (18) eine Verteilerleitung (20) aufweist, über die die Strombegrenzereinheit (18) an die Netzabschnitte (8) angeschlossen ist,
- die Strombegrenzereinheit (18) eine Entladeeinheit aufweist und die Verteilerleitung (20) eine Entladeleitung (21b) aufweist für ein strombegrenztes Entladen von Netzabschnitten (8), die von der Einspeiseeinheit (6) getrennt sind
**dadurch gekennzeichnet, dass**
- die Strombegrenzereinheit (18) einen steuerbaren Spannungsgeber und die Verteilerleitung (20) eine Ladeleitung (21a) für ein Vorladen der Netzabschnitte (8) im Betrieb aufweist, und wobei
- das Schaltelement (16a,b) einen elektronischen Schalter (26) und einen potentialtrennenden Schalter (28) aufweist und
- die Ladeleitung (21a) und die Entladeleitung (21b) zwischen den elektronischen Schalter (26) und den potentialtrennenden Schalter (28) angeschlossen sind.

11. Gleichstrom-Netz (2) nach dem vorhergehenden Anspruch, wobei die Verteilerleitung (20) parallel zur Einspeiseleitung (12) geschaltet ist.

12. Gleichstrom-Netz (2) nach einem der Ansprüche 10 oder 11, wobei der steuerbare Spannungsgeber als ein Tiefsetzsteller (22) ausgebildet ist.

13. Gleichstrom-Netz (2) nach einem der Ansprüche 10 bis 12, wobei die Entladeeinheit als ein steuerbarer Entladesteller (42) ausgebildet ist.

14. Gleichstrom-Netz (2) nach einem der Ansprüche 10 bis 13, wobei an die Gleichstromversorgung mehrere Strombegrenzereinheiten (18) angeschlossen sind, die einen kaskadierten Aufbau aufweisen und jede Strombegrenzereinheit (18) an mehrere Netzabschnitte (8) angeschlossen ist.

15. Gleichstrom-Netz (2) nach einem der Ansprüche 10 bis 14, wobei die Ladeleitung (21a) und / oder die Entladeleitung (21b) eine Entkoppeldiode (29) aufweisen.

## Claims

1. Method for operating a direct-current network (2) which has a plurality of network sections (8) disconnectably connected via in each case a switching element (16a,b) and an infeed unit (6), wherein, after disconnection of the network sections (8) from the infeed unit (6) and prior to interconnection of the network sections (8) with the infeed unit (6), charge-reversal currents which flow between the network sections (8) or between the infeed unit (6) and the network sections (8) due to differing voltage levels are limited with the assistance of an open-loop controllable current limiter unit (18), wherein
- the infeed unit (6) is connected to the direct-current network (2) via an infeed line (12) and the current limiter unit (18) is connected to the network sections (8) via a common additional distribution line (20), such that the open-loop controllable current limiter unit (18) limits the charge-reversal currents via the common additional distribution line (20),
**characterised in that**
- after disconnection of the infeed unit (6) from the network sections (8), the charge-reversal currents are limited by open-loop controlled discharging of the network sections (8) and to this end the distribution line (20) has a discharging line (21b) and the charge-reversal currents are limited by discharging the network sections (8) by means of a discharging unit via the discharging line (21b).

2. Method according to the preceding claim, wherein the current limiter unit (18) takes the form of an open-loop controllable voltage supply and the distribution line (20) has a charging line (21a) via which the network sections (8), which have differing voltage levels after disconnection and prior to interconnection, are precharged with a precharging voltage, such that the differing voltage levels are equalized to limit the charge-reversal currents.

3. Method according to the preceding claim, wherein a precharging voltage is increased during precharging.

4. Method according to one of claims 2 or 3, wherein the open-loop controllable voltage supply takes the form of a DC-DC converter, in particular of a voltage reduction unit (22).

5. Method according to one of claims 2 to 4, wherein the open-loop controllable voltage supply is supplied by the infeed unit (6).

6. Method according to one of claims 2 to 5, wherein the precharging voltage is increased in such a manner that, after precharging, it is equalized with the value of an infeed voltage of the infeed unit.

7. Method according to one of claims 2 to 6, wherein the precharging voltage is supplied to a respective switching element (16a,b) in the network sections for precharging the network sections (8).

8. Method according to one of the preceding claims, wherein the discharging unit takes the form of an open-loop controllable discharging chopper (42), such that, after disconnection of the network sections (8) from the infeed unit (6) for discharging, the charge-reversal currents, limited in value, drain away via the discharging chopper (42), such that the voltages of the network sections (8) are equalized.

9. Method according to one of the preceding claims, wherein current limitation is open-loop controlled by means of a remote controller.

10. Direct-current network (2) which has an infeed unit (6) with an infeed line (12) and a plurality of network sections (8) connected so as to be disconnectable via switching elements (16a,b) from the infeed unit (6), wherein, in addition to the infeed unit (6), an open-loop controllable current limiter unit (18) is connected to the network sections (8), wherein
- the current limiter unit (18) is configured during operation to limit charge-reversal currents which arise due to a voltage difference between the network sections (8) or between the infeed unit (6) and the network sections (8),
- the current limiter unit (18) has a distribution line (20) via which the current limiter unit (18) is connected to the network sections (8),
- the current limiter unit (18) has a discharging unit and the distribution line (20) has a discharging line (21b) for current-limited discharging of network sections (8) which are disconnected from the infeed unit (6), **characterised in that**
- the current limiter unit (18) has an open-loop controllable voltage supply and the distribution line (20) has a charging line (21a) for precharging the network sections (8) during operation, and wherein
- the switching element (16a,b) has an electronic switch (26) and an isolating switch (28) and
- the charging line (21a) and the discharging line (21b) are connected between the electronic switch (26) and the isolating switch (28).

11. Direct-current network (2) according to the preceding claim, wherein the distribution line (20) is connected in parallel to the infeed line (12).

12. Direct-current network (2) according to one of claims 10 or 11, wherein the open-loop controllable voltage supply takes the form of a voltage reduction unit (22).

13. Direct-current network (2) according to one of claims 10 to 12, wherein the discharging unit takes the form of an open-loop controllable discharging chopper (42).

14. Direct-current network (2) according to one of claims 10 to 13, wherein a plurality of current limiter units (18) are connected to the direct-current supply which have a cascade structure and each current limiter unit (18) is connected to a plurality of network sections (8).

15. Direct-current network (2) according to one of claims 10 to 14, wherein the charging line (21a) and/or the discharging line (21b) have a decoupling diode (29).

## Revendications

1. Procédé pour faire fonctionner un réseau (2) de courant continu, qui a plusieurs parties (8) de réseau, reliées avec possibilité de séparation par respectivement un élément (16a, b) de coupure, et une unité (6) d'alimentation, dans lequel, après une séparation des parties (8) du réseau de l'unité (6) d'alimentation et avant une interconnexion des parties (8) du réseau avec l'unité (6) d'alimentation, on limite, à l'aide d'une unité (18) de limitation du courant pouvant être commandée, des courants de transfert, qui passent entre les parties (8) du réseau ou entre l'unité (6) d'alimentation et les parties (8) du réseau en raison de niveaux de tension différents, dans lequel
- l'unité (6) d'alimentation est connectée au réseau (2) de courant continu par l'intermédiaire d'une ligne (12) d'alimentation et l'unité (18) de limitation du courant aux parties (8) du réseau par l'intermédiaire d'une ligne (20) commune supplémentaire de répartiteur, de manière à ce que l'unité (18) de limitation du courant pouvant être commandée limite les courants de transfert par l'intermédiaire de la ligne (20) commune supplémentaire de répartiteur,
**caractérisé en ce que**
- on limite, par une décharge commandée des parties (8) du réseau, les courants de transfert après une séparation de l'unité (6) d'alimentation des parties (8) du réseau et à cet effet, la ligne (20) de répartiteur a une ligne (21b) de décharge et la limitation des courants de transfert s'effectue, par l'intermédiaire de la ligne (21b) de décharge, par une décharge des parties (8) du réseau au moyen d'une unité de décharge.

2. Procédé suivant la revendication précédente, dans lequel l'unité (18) de limitation du courant est constituée sous la forme d'un capteur de tension pouvant être commandé et la ligne (20) de répartiteur a une ligne (21a) de charge, par laquelle les parties (8) du réseau qui, après la séparation et avant l'interconnexion, ont des niveaux de tension différents, subissent une précharge à une tension de précharge, de manière à égaliser les niveaux de tension différents pour la limitation des courants de transfert.

3. Procédé suivant la revendication précédente, dans lequel on élève la tension de précharge pendant la précharge.

4. Procédé suivant l'une des revendications 2 ou 3, dans lequel le capteur de tension pouvant être commandé est constitué sous la forme d'un transformateur de tension continue, notamment sous la forme d'un dévolteur (22).

5. Procédé suivant l'une des revendications 2 à 4, dans lequel on alimente par l'unité (6) d'alimentation le capteur de tension pouvant être commandé.

6. Procédé suivant l'une des revendications 2 à 5, dans lequel on élève la tension de précharge de manière à l'égaliser après la précharge à la valeur d'une tension d'alimentation de l'unité d'alimentation.

7. Procédé suivant l'une des revendications 2 à 6, dans lequel on applique la tension de précharge pour la précharge des parties (8) du réseau à un élément (16a, b) de coupure respectif dans les parties du réseau.

8. Procédé suivant l'une des revendications précédentes, dans lequel l'unité de décharge est constituée sous la forme d'un convertisseur (42) de décharge pouvant être commandé, de manière à ce qu'après la séparation des parties (8) du réseau de l'unité (6) d'alimentation pour la décharge, les courants de transfert passent, en étant limitée dans leur valeur, dans le convertisseur (42) de décharge, de façon à égaliser les tensions entre les parties (8) du réseau.

9. Procédé suivant l'une des revendications précédentes, dans lequel on commande la limitation du courant au moyen d'une télécommande.

10. Réseau (2) à tension continue, qui a une unité (6) d'alimentation ayant une ligne (12) d'alimentation et plusieurs parties (8) de réseau reliées de manière à pouvoir être séparées de l'unité (6) d'alimentation par des éléments (16a, b) de coupure, dans lequel, en plus de l'unité (6) de coupure, une unité (18) de limitation de courant pouvant être commandée est connectée aux parties (8) du réseau, dans lequel
- l'unité (18) de limitation du courant est constituée pour limiter en fonctionnement des courants de transfert, qui se produisent en raison d'une différence de tension entre les parties (8) du réseau ou entre l'unité (6) d'alimentation et les parties (8) du réseau,
- l'unité (18) de limitation du courant a une ligne (20) de répartiteur, par laquelle l'unité (18) de limitation du courant est connectée aux parties (8) du réseau,
- l'unité (18) de limitation du courant a une unité de décharge et la ligne (20) de répartiteur a une ligne (21b) de décharge pour une décharge limitée en courant des parties (8) du réseau, qui sont séparées de l'unité (6) d'alimentation, **caractérisé en ce que**
- l'unité (18) de limitation du courant a un capteur de tension pouvant être commandé et la ligne (20) de répartiteur a une ligne (21a) de charge pour une précharge des parties (8) du réseau en fonctionnement et dans lequel
- l'élément (16a, b) de coupure a un interrupteur (26) électronique et un interrupteur (28) de séparation de potentiel et
- la ligne (21a) de charge et la ligne (21b) de décharge sont raccordées entre l'interrupteur (26) électronique et l'interrupteur (28) de séparation de potentiel.

11. Réseau (2) à courant continu suivant la revendication précédente, dans lequel la ligne (20) de répartiteur est montée en parallèle à la ligne (12) d'alimentation.

12. Réseau (2) à courant continu suivant l'une des revendications 10 ou 11, dans lequel le capteur de tension pouvant être commandé est constitué sous la forme d'un dévolteur (22).

13. Réseau (2) à courant continu suivant l'une des revendications 10 à 12, dans lequel l'unité de décharge est constituée sous la forme d'un régleur (42) de décharge pouvant être commandé.

14. Réseau (2) à courant continu suivant l'une des revendications 10 à 13, dans lequel à l'alimentation en courant continu sont connectées plusieurs unités (18) de limitation du courant, qui ont une structure en cascade, et chaque unité (18) de limitation du courant est connectée à plusieurs parties (8) du réseau.

15. Réseau (2) à courant continu suivant l'une des revendications 10 à 14, dans lequel la ligne (21a) de charge et/ou la ligne (21b) de décharge ont une diode (29) de découplage.
